Europäisches Patentamt

European Patent Office

Office européen des brevets

(11) Veröffentlichungsnummer: **0 229 894 B1**

# EUROPÄISCHE PATENTSCHRIFT

(45) Veröffentlichungstag der Patentschrift: 03.07.91

(21) Anmeldenummer: 86114818.7

(22) Anmeldetag: 31.10.86

(51) Int. Cl.⁵: **B23F 19/00, B23F 21/00, B23F 23/00**

(54) Verfahren zum Schleifen der Verzahnung von Kegelrädern mit längsgekrümmten Zähnen sowie Werkzeug und Vorrichtung zur Durchführung des Verfahrens.

(30) Priorität: 13.12.85 CH 5330/85
11.08.86 CH 3195/86

(43) Veröffentlichungstag der Anmeldung:
29.07.87 Patentblatt 87/31

(45) Bekanntmachung des Hinweises auf die
Patenterteilung:
03.07.91 Patentblatt 91/27

(84) Benannte Vertragsstaaten:
BE CH DE FR GB IT LI SE

(56) Entgegenhaltungen:
DE-A- 828 790          DE-A- 3 107 869
DE-A- 3 314 793       DE-A- 3 402 429
DE-A- 3 425 800       DE-B- 1 057 850
DE-C- 692 127          GB-A- 1 011 538
GB-A- 2 005 577       GB-A- 2 145 186
GB-A- 2 155 372       US-A- 1 821 188
US-A-22 565 86

(73) Patentinhaber: **Werkzeugmaschinenfabrik
Oerlikon-Bührle AG
Birchstrasse 155
CH-8050 Zürich(CH)**

(72) Erfinder: **Kotthaus, Erich
Schmittenacker 18
CH-8304 Wallisellen(CH)**
Erfinder: **Ginier, Ami
Lärchenstrasse 8
CH-8962 Bergdietikon(CH)**
Erfinder: **Hildinger, Otto
Gfennstrasse 27
CH-8603 Schwerzenbach(CH)**

Rank Xerox (UK) Business Services

## Beschreibung

Die Erfindung bezieht sich auf ein Verfahren zum Schleifen der Verzahnung von Kegelrädern mit längsgekrümmten Zähnen gemäss dem Oberbegriff des Patentanspruchs 1, auf ein Werkzeug zur Ausführung des Verfahrens und auf eine Vorrichtung zur Durchführung des Verfahrens gemäß den Oberbegriffen den Patentansprüche 3 und 9.

Der nachfolgende Fertigungsablauf bei der Kegelrad- und Hypoidgetriebe-Herstellung hat sich in wirtschaftlicher und qualitativer Hinsicht bewährt: Verzahnen durch Fräsen bzw. Schneiden, Einsatzhärten und satzweises Läppen. Dabei besteht im allgemeinen ein Radsatz aus jeweils einem Ritzel und Tellerrad, welche beim Läppen zum späteren Einbau paarweise zu kennzeichnen sind. Schwierigkeiten bereitete stets der nicht zu vermeidende Härteverzug bzw. die dabei resultierende Qualitätseinbusse. Durch das paarweise Läppen werden zur Verbesserung der Laufruhe der Radsätze zusätzlich zur Verfeinerung der Zahnflankenoberflächen Einzeleingriffsfehler behoben, Rund- und Planlauffehler jedoch bleiben erhalten. Sind solche Rund- und Planlauffehler nicht tolerierbar, müssen andere Feinbearbeitungsverfahren angewendet werden.

Bei der Grosseriefertigung von Getrieben, insbesondere für den Personen- und Lastfahrzeugbau, werden z.B. Stirnräder nach dem Weichfräsen (Vorverzahnen) meist geschabt und anschliessend gehärtet. Die dabei erzielte Qualität genügt den Anforderungen, weil der Härteverzug bei Stirnrädern gering und die verwendete Evolventenverzahnung unempfindlicher gegen Rundlauffehler sind. Die in solchen Getrieben angeordneten bogenverzahnten Kegelräder sind wie vorgängig beschrieben hergestellt und paarweise eingebaut, ohne dabei die durch die Stirnräder vorgegebene Qualitätsstufe des Getriebes zu mindern. Zur Steigerung der Wirtschaftlichkeit soll jedoch das feste Paaren von Ritzel und Tellerrad der Kegelradsätze wegfallen, d.h. bei der Fein- oder Fertigbearbeitung der Verzahnung ist der Härteverzug zu eliminieren bzw. nach dem Härten rückgängig zu machen.

Aus der Praxis ist seit langem bekannt, dass die Verzahnung von durch Weichverzahnen im Einzelteilverfahren hergestellten Kegelrädern, also mit kreisbogenförmigen Zähnen, nach dem Einsatzhärten mit Topfschleifscheiben ebenfalls im Einzelteilverfahren geschliffen wird, vor allem dann, wenn höchste Anforderungen an die Getriebe gestellt werden, wie beispielsweise bei Rotorantrieben von Helikoptern. In solchen Anwendungsfällen sind die beachtlich höheren Herstellungskosten von untergeordneter Bedeutung. Weiter ist aus der EP-A 022 586 (US 4 467 567) ein Verfahren zum Balligschleifen von Zahnrädern mit längsgekrümmten Zähnen, welche durch ein kotinuierliches Schneidverfahren hergestellt sind, bekannt. Beide Feinbearbeitungsverfahren eignen sich jedoch aus wirtschaftlichen Gründen nicht für die Anwendung in der Grosseriefertigung, beispielsweise beim Fahrzeugbau.

Weiter ist aus der DE-A 2 721 164 eine Topfschleifscheibe mit zwei kegeligen Schleifflanken zum Schleifen von Spiral- bzw. bogenverzahnten Kegelrädern im Einzelteilwälzverfahren bekannt, wobei die Schleifflanken einander unter Bildung eines eingesenkten Kegelinnenrings zugewandt sind. Im Artikel "Schleifen bogenverzahnter Kegelräder in der Kleinseriefertigung in "Werkstatt und Betrieb" 118 (1985) 10, Seiten 703-705, ist eine entsprechende Maschinenkonzeption beschrieben. Dabei geht aus der Einleitung hervor, dass es bisher keine Möglichkeit gab, die Flanken bogenverzahnter Kegelräder wirtschaftlich in Kleinserie zu schleifen. Die Maschine gestattet das Schleifen achsversetzter und nichtachsversetzter Kegelräder mit den Topfschleifscheiben. Dabei wird Zahn um Zahn im Einzelteilverfahren bearbeitet. Sie ist also vor allem geeignet, um im Einzelteilverfahren vorverzahnte, also kreisbogenförmig hergestellte Kegelräder zu bearbeiten. Unter bestimmten Bedingungen können auch vorverzahnte Kegelräder mit epizykloidenförmigen oder evolventenförmigen Zahnlängslinien zu einem Kreisbogen nachgeschliffen werden. Weicht aber die Epizykloiden- bzw. Evolventenform zu stark von einem Kreisbogen ab, um mehr als ein zulässiges Schleifvorgabemass, so ist dieses Verfahren nicht mehr anwendbar.

Aus der "wt-Zeitschrift für industrielle Fertigung", 75 (1985), Seiten 461-464, ist ein weiteres Verfahren zur Feinbearbeitung gehärteter Spiralkegelräder durch Wälzfräsen bekannt, indem die im kontinuierlichen Wälzfräsverfahren vorbearbeiteten Spiralkegelräder im Anschluss an das Einsatzhärten fertiggefräst werden. Die dazu nötigen Schneidwerkzeuge entsprechen weitgehend denen, die auch für das Weichverzahnen verwendet werden, jedoch sind die Werkzeugschneiden für die Hartbearbeitung nun hartmetallbestückt. Somit kann die gleiche Maschine für das Weich- und Hartbearbeiten verwendet werden. Vorzugsweise werden dabei am Hartmetallträger Schneidleisten angebracht, welche eine Schicht aus polikristallinem kubischen Bornitrid, auch als CBN oder Borazon bekannt, an ihrer Schneidfläche aufweisen.

Weiter ist aus der DE-C 1 161 465 eine Vorrichtung zum Feinbearbeiten von Zahnrädern mit einem Schabrad oder einem andern zahnradförmigen Werkzeug bekannt, bei der sich Werkstück und Werkzeug mit Zahneingriff aufeinander wälzen und ihre Achsen sich kreuzen und bei der Werkstück und Werkzeug über eine Welle mit je einem Führungszahnrad verbunden sind und jeweils das Schabrad und das zugehörige Führungsrad sowie das Werkstückzahnrad und das zugehörige Führungsritzel auf ein und

EP 0 229 894 B1

derselben Welle drehfest sitzen. Diese Vorrichtung wurde aber nur zum Bearbeiten von geradoder schrägverzahnten Stirnzahnrädern eingesetzt und ist zum Feinbearbeiten von Kegelrädern mit längsgekrümmten Zähnen nicht verwendbar.

Weiter ist in der GB-A-2 155 372 ein Verfahren und ein System zur Verbesserung der Oberflächengenauigkeit und Oberflächengüte kontinuierlich erzeugten Zähne mit gekrümmter Form beschrieben. Ein Werkstückpaar wird in zeitlich oder getrieblich abgestimmter Beziehung unter Kraft und Vorschub in einem konjugierten Betrieb mittels langsamen Schleifens bearbeitet, indem eines der Werkstücke wenigstens teilweise an seinen Passteilen mit Schleifmittel versehen ist und dadurch als Werkzeug dient. Das vorgeschlagene Verfahren ist nur eingeschränkt anwendbar für Zahnradgetriebepaare mit Achsanordnungen oder mit unterschiedlichen Steigungen, welche relative Gleitgeschwindigkeiten aufweisen, um das definierte Schleifen zu ermöglichen. Langsames Schleifen ist darin definiert als Gleitgeschwindigkeit ungefähr im Bereich von 13 - 150 m/min und normales Schleifen mit mehr als 600 m/min, was sich somit auch auf die Bearbeitungszeit einschränkend auswirkt.

Weiter ist aus DE-C-692 127 ein gattungsgleiches Schleifverfahren bekannt, bei dem auf einer Abwälzfräsmaschine Kegelräder mit einer Schleifschnecke als Werkzeug in verschraubendem Eingriff stehen und unter zusätzlicher Hin- und Herschwenkung einer das Werkzeug tragenden Planscheibe bearbeitet werden. Bei diesem Verfahren sind aber die Durchmesser des Werkzeuges in ihrer Grösse an die Stärke der Zahnlängskrümmung gebunden, wodurch bei Kegelschnecken anwendbarer Grösse eine grosse Abnutzung entsteht und deshalb von einer Anwendung dieses Verfahrens Abstand genommen wurde. Zur Vermeidung der Schwierigkeiten wurde vorgeschlagen, die Schleifschnecke zum Zwecke des Abnutzungsausgleiches in Richtung ihres kleineren Durchmessers weiterzuschrauben.

Ferner sind aus US-A-1 821 188 und US-A-2 256 586 Lösungen für gattungsfremde Feinbearbeitungen von Kegelrädern bekannt, welche die Verwendung von entsprechenden Werkzeugen mit allgemeiner Hypoidanordnung zum Werkstück vorschlagen, z.B. Läpp- oder Schabwerkzeuge in Kegelradform.

Die Aufgabe der Erfindung, wie sie in den Ansprüchen 1,3 und 9 gekennzeichnet ist, besteht darin, ein Verfahren zum Schleifen der Verzahnung von Kegelrädern mit längsgekrümmten Zähnen für Kegelradgetriebe mit allgemeiner Achsanordnung aufzuzeigen, welches einen wirtschaftlichen Einsatz insbesondere bei Klein- und Grosserien ermöglicht sowie in der Schaffung eines Werkzeuges zur Ausführung und einer Vorrichtung zur Durchführung des Verfahrens.

Die durch die Erfindung erreichten Vorteile sind im wesentlichen darin zu sehen, dass das Verfahren unabhängig von der allgemeinen Achsanordnung des Getriebes und von den Zahnlängsformen und den Zahnprofilen, z.B. Kreisbogen, Zykloiden oder Evolventen, mit oder ohne Balligkeit sowie gerade oder gewälzte Zahnprofile, anwendbar ist und als kontinuierliches Schleifverfahren angewendet sowohl die Wirtschaftlichkeit wie auch zusätzlich die Qualität von Kegelradgetrieben vorteilhaft beeinflusst, indem die Auswirkungen des Härteverzuges, die Einzeleingriffs-, Rundlauf- und Planlauffehler weitgehend eliminiert werden und in der Folge das paarweise Kennzeichnen von Ritzel und Tellerrad und deren Lagerhaltung entfallen. Damit werden erstmals serienmässig exakte Nachbildungen von Meisterrädern eines Meisterradsatzes ermöglicht. Ein weiterer Vorteil besteht darin, dass das Schleifverfahren auch unabhängig von der Herstellung eines vorverzahnten Kegelrades, z.B. durch Senken, Walzen, Giessen etc., anwendbar ist.

Eine vorteilhafte Ausbildung des Werkzeuges besteht darin, dass dessen Zahnflanken mit einer dünnen Schicht aus abrasivem Material, beispielsweise Borazon, beschichtet sind.

Nachfolgend werden anhand von Zeichnungen Ausführungsbeispiele der Erfindung erläutert. Es zeigen:

Fig. 1 ein Kegelradpaar, ohne Achsversetzung,
Fig. 2 als Ausführungsbeispiel eine Anordnung zum Schleifen des Tellerrades gemäss Fig.1 nach dem erfindungsgemässen Verfahren,
Fig. 3 eine schematische Darstellung der Achsversetzungsgeometrie von Tellerrad und Werkzeug,
Fig. 4 im vergrösserten Massstab eine Darstellung eines Ueberdeckungsverhältnisses von Abwicklungen eines Planrades und des Werkzeuges von Fig.3,
Fig. 5 als weiteres Ausführungsbeispiel eine Anordnung zum Schleifen des Ritzels gemäss Fig.1 nach dem erfindungsgemässen Verfahren,
Fig. 6 eine perspektivische Darstellung von Zähnen zur Erläuterung der Schleifrichtung,
Fig. 7 im vergrösserten Massstab einen Schnitt durch einen Werkzeugzahn,
Fig. 8 im vergrösserten Massstab einen Ausschnitt aus einer Verzahnung beim Schleifen nach dem erfindungsgemässen Verfahren,
Fig. 9 wie Fig.8, nach einem vorzugsweisen Verfahren,
Fig.10 eine schematische Darstellung zur Bestimmung der Schleifgeschwindigkeit,
Fig.11 eine Draufsicht auf die erfindungsgemässe Schleifmaschine zum Schleifen von grossen Ritzeln für Lastkraftwagen,

3

Fig.12    eine ähnliche Schleifmaschine wie in Fig.11 zum Schleifen von kleinen Ritzeln für Personenwagen,

Fig.13    eine ähnliche Schleifmaschine wie in Fig.11 zum Schleifen von grossen Tellerrädern für Lastkraftwagen,

Fig.14    eine ähnliche Schleifmaschine wie in Fig.11 zum Schleifen von kleinen Tellerrädern für Personenwagen,

Fig.15    eine Teilansicht der Schleifmaschine in Richtung des Pfeiles A in Fig.11 gesehen,

Fig.16    einen vertikalen Schnitt nach Linie XVI-XVI in Fig.12,

Fig.17    einen Schnitt nach Linie XVII-XVII in Fig.16,

Fig.18    einen horizontalen Schnitt in Höhe der Werkzeugspindel in Fig.11,

Fig.19    eine schematische Darstellung einer "elektrischen Welle".

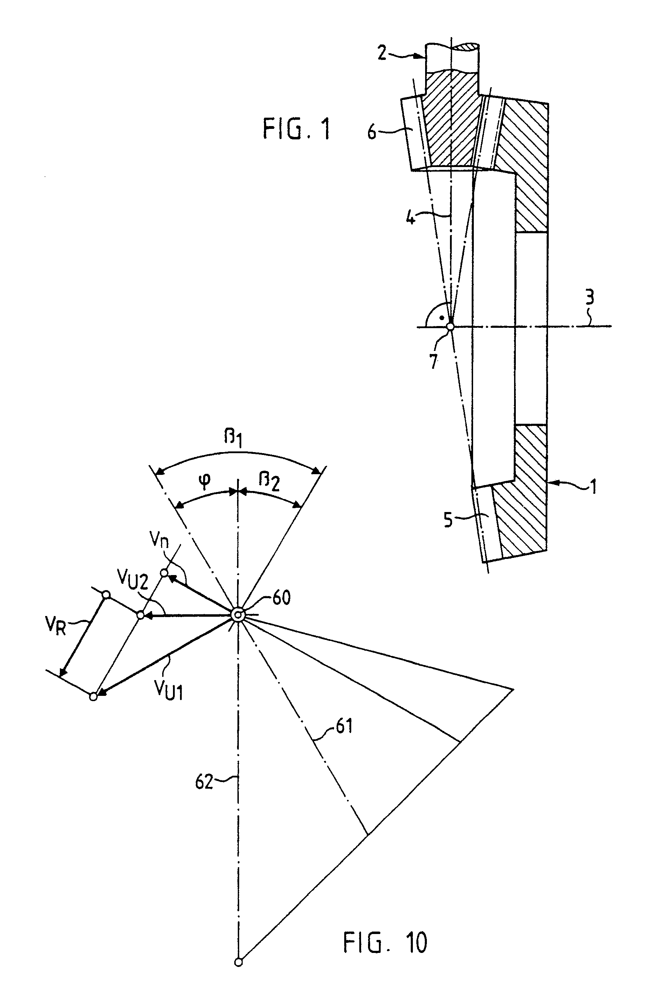

Die nachfolgend beschriebenen Ausführungsbeispiele gemäss Fig.1 bis 10 beziehen sich auf vorverzahnte Kegelräder eines Kegelradsatzes, welche mit einem kontinuierlichen Schneidverfahren mit einem rotierenden Messerkopf hergestellt werden, wobei beispielsweise eine Längsballigkeit der Zähne durch Schiefstellung der Messerkopfachse erzeugt wird. An sich können solche vorverzahnte Kegelräder auch mit anderen bekannten Herstellungsverfahren gefertigt werden, wobei sich eventuell unterschiedliche Zahnlängsformen ergeben, beispielsweise Kreisbogen, Zykloiden oder Evolventen, d.h. das erfindungsgemässe Verfahren ist durchführbar unabhängig von der Zahnlängsform und der Herstellung der Kegelräder. Lediglich die Dimensionierung des Werkzeuges ist unterschiedlich, indem je nach gewählter Zahnlängsform die Bestimmung der Hauptdaten für ein Werkzeug als Teil eines Getriebes mit Achsversetzung, auch Hypoidgetriebe genannt, in jeweils bekannter Weise durchzuführen ist.

Gemäss Fig.1 besteht ein ohne Achsversetzung dargestelltes Kegelradpaar, auch Kegelradsatz oder Kegelradgetriebe bezeichnet, aus je einem Tellerrad 1 und Ritzel 2. Deren Radachsen 3 und 4 stehen beispielsweise rechtwinklig zueinander und kreuzen sich im Teilkegelzentrum 7 beider Kegelräder. Eine Verzahnung 5 des Tellerrades 1 wird nur durch Einstechen und eine Verzahnung 6 des Ritzels durch Abwälzen erzeugt, d.h. die Zähne der Verzahnung 5 weisen normalerweise gerade und diejenigen der Verzahnung 6 gekrümmte Höhenflanken auf, was allerdings aus Fig.1 nicht deutlich hervorgeht, aber bekannt ist. Zum Einbau eines solchen Kegelradsatzes, mit je einem beliebig ausgewählten Tellerrad 1 und Ritzel 2, werden beide Kegelräder in Serien mit einer Schleifzugabe in bekannter Weise vorverzahnt und anschliessend erfindungsgemäss geschliffen.

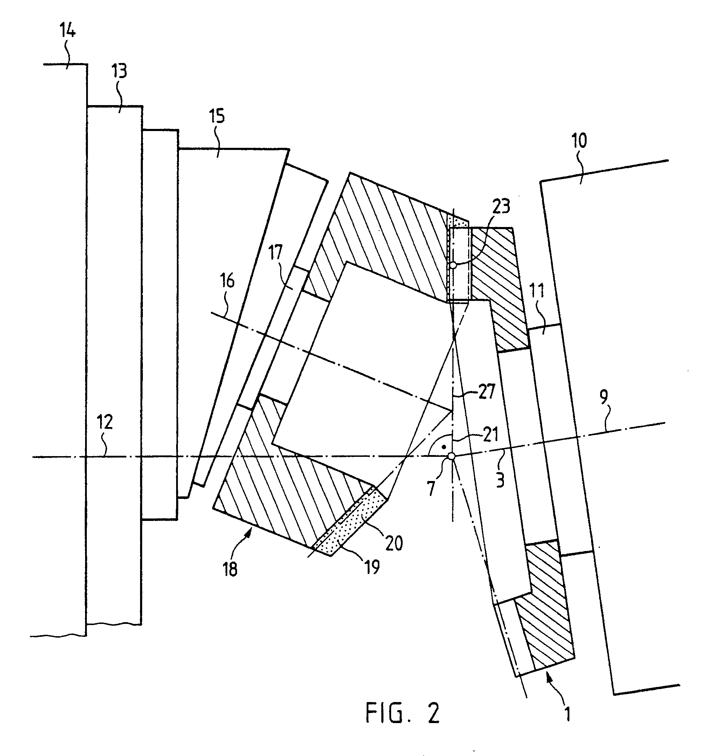

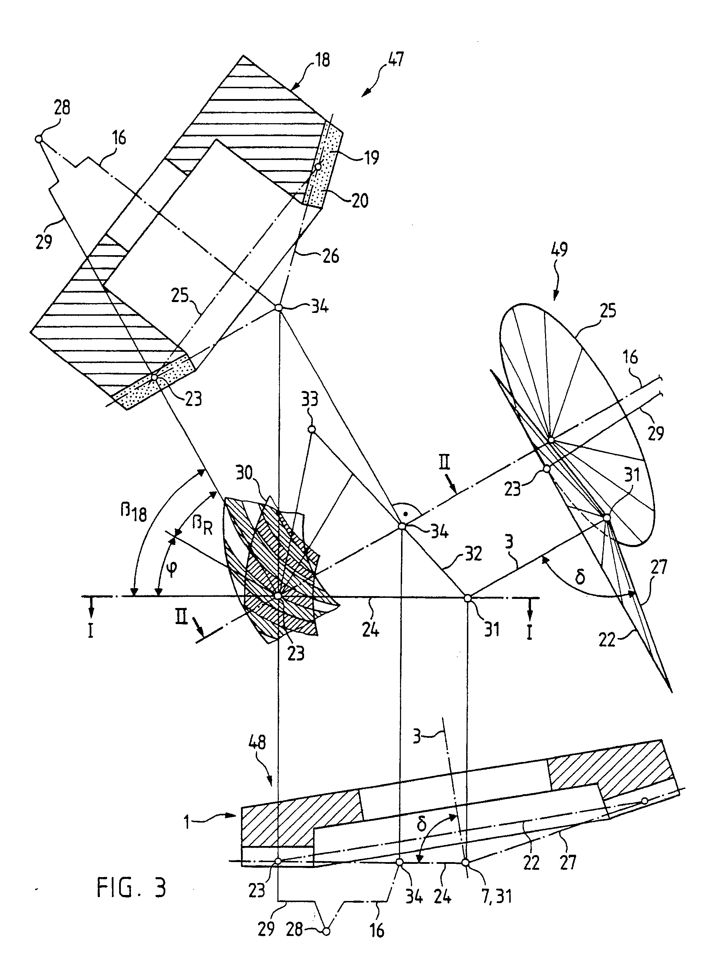

In Fig.2 ist das vorverzahnte Tellerrad 1 als zu schleifendes Werkstück 1 an einer um eine Achse 9 drehbaren Spindel 11 eines Spindelstockes 10 aufgespannt. Die Radachse 3 fluchtet mit der Achse 9 der Spindel 11. Das Teilkegelzentrum 7 des Tellerrades 1 liegt auf einer Achse 12, um welche eine Wälztrommel 13 in einem Wälzstock 14 drehbar gelagert ist. Ein mit der Wälztrommel 13 verbundener Schwenkteil 15 weist eine Spindel 17 auf, an der ein Werkzeug 18, mit einer Werkzeugachse 16, befestigt ist. Das Werkzeug 18 ist kegelschraubenförmig ausgebildet und weist eine abrasive Oberfläche 19 an seinen Zahnflanken 20 auf. Weiter ist es mit Achsversetzung zum Werkstück 1 und mit diesem ein Kegelradpaar bildend ausgelegt und so angeordnet, dass eine obere Linie 21 eines Teilkegels 27 vom Werkstück 1 im Bearbeitungsbereich möglichst senkrecht zur Achse 12 steht. Zur Vereinfachung sind Werkstück 1 und Werkzeug 18 nach verschiedenen Schnitten entsprechend den Schnittlinien I-I für das Werkstück 1 und II-II für das Werkzeug 18 in Fig.3 dargestellt.

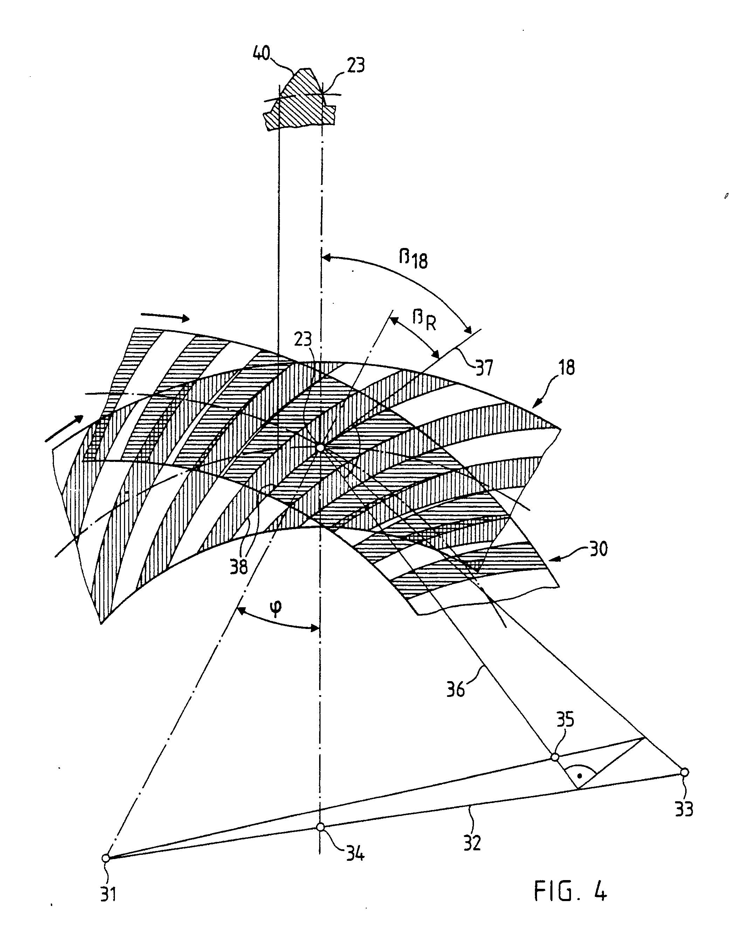

Fig.3 zeigt die Achsversetzungsgeometrie von Werkzeug 18 zum Werkstück 1 anhand einer bekannten Planradgeometrie in Verbindung mit einem Ueberdeckungsverhältnis der Abwicklungen der Teilflächen von einem dem Tellerrad 1 zugeordneten Planrad 30 und dem Werkzeug 18 sowie Werkstück 1 und Werkzeug 18 im Schnitt und eine Stellung ihrer Teilkegel 27 und 26 in drei Umklappungen 47,48 und 49. Das Ueberdeckungsverhältnis und ein Schnitt 40 durch einen Werkzeugzahn sind zusätzlich im vergrösserten Massstab aus Fig.4 ersichtlich. Auf einer gemeinsamen Zahnlängslinie 38 von Werkzeug 18 und Planrad 30 befindet sich ein gemeinsamer Berechnungspunkt 23. Ein Planradzentrum 31 ist über eine Gerade 32 mit einem Schneidwerkzeugzentrum 33 verbunden. Auf dieser Geraden 32 befindet sich ein Teilkegelzentrum 34 des Werkzeuges 18. Ein Krümmungszentrum 35 liegt auf einer Normalen 36 zu einer Tangente 37 an der gemeinsamen Zahnlängslinie 38 im Berechnungspunkt 23. Durch die Tangente 37 sind je ein Spiralwinkel $\beta_R$ und $\beta_{18}$ von Planrad 30 bzw. Werkstück 1 und Werkzeug 18 festgelegt. Ein Achsverset-zungswinkel $\phi$ wird bestimmt durch die Differenz von $\beta_{18} - \beta_R$ Wie ersichtlich, ergibt sich eine gute Uebereinstimmung der beiden Abwicklungen der Teilflächen Von Planrad 30 und Werkzeug 18.

In der entlang eines mittleren Planradius 24 erfolgten Umklappung 48 ist das Tellerrad 1 im Schnitt dargestellt. Daraus ist ersichtlich, dass Planradzentrum 31 und Teilkegelzentrum 7 des Tellerrades 1 sowie Planradius 24 und eine Linie des Teilkegels 27 zusammenfallen. Auf dieser Linie befindet sich wiederum eine Projektion des Teilkegelzentrums 34. Die Lage der Radachse 3 ergibt sich zwangsweise. Die Lage der

4

Werkzeugachse 16 ergibt sich aus dem Teilkegelzentrum 34 und einem Schnittpunkt 28 mit einer Kathete 29, siehe auch Umklappung 47. Diese Lage der beiden Achsen 3 und 16 und damit von Werkstück 1 und Werkzeug 18 entspricht derjenigen von Fig.2.

Die Umklappung 47 verdeutlicht die graphische Bestimmung des Teilkegels 26 und eines Teilkreises 25 des Werkzeuges 18, das als Gegenrad zum Tellerrad 1 vorzugsweise mit schiefwinkliger Hypoidgeometrie und mit abrasiver Oberfläche 19 an den Zahnflanken 20 der kegelschraubenförmigen Verzahnung gemäss diesem Beispiel ausgebildet ist.

Aus der Umklappung 49 ist die Stellung der beiden Teilkegel 26 und 27 zueinander ersichtlich. Dabei liegt der Berechnungspunkt 23 sowohl auf einem Teilkreis 22 des Tellerrades 1 wie auch auf dem Teilkreis 25 des Werkzeuges 18. Die Werkzeugachse 16 und die Kathete 29 stellen aber Projektionen dar. Der Teilkegel 27, der Teilkreis 22 und ein Winkel $\delta$ sind gleichwertig zu denjenigen in der Umklappung 48.

Insbesondere durch die Lage der Radachse 3 und der Werkzeugachse 16 in den Darstellungen der Fig.3 geht die Hypoidgeometrie, in diesem Beispiel eine schiefwinklige Hypoidgeometrie, von Werkzeug 18 zum Werkstück 1 hervor.

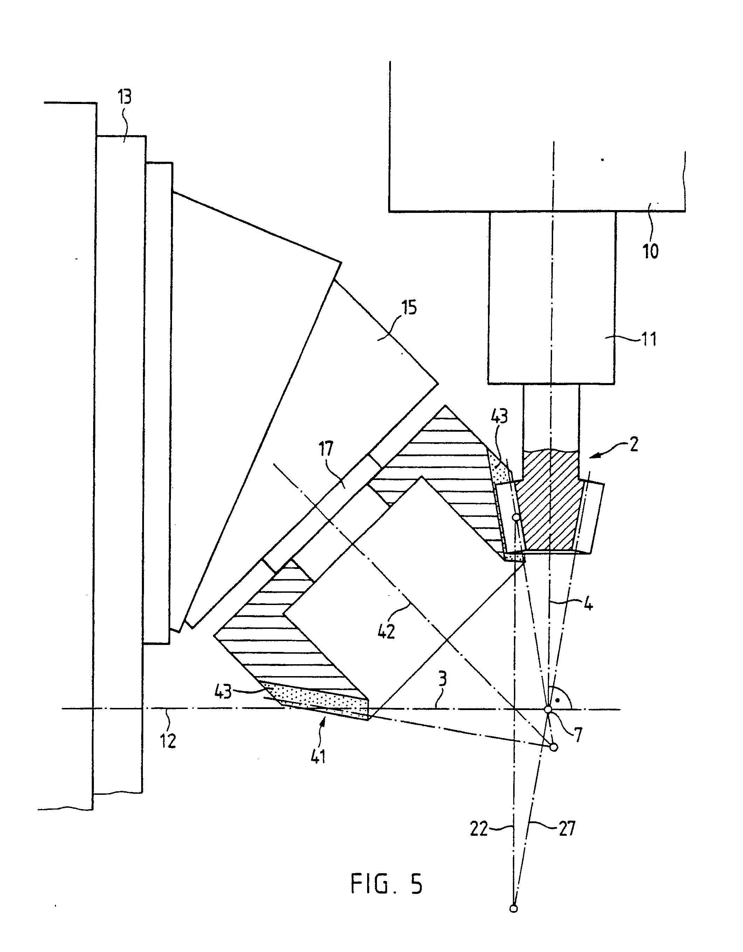

Gemäss Fig.5 ist das vorverzahnte Ritzel 2 als zu schleifendes Werkstück an der drehbaren Spindel 11 des Spindelstockes 10 aufgespannt. Das Teilkegelzentrum 7 des Ritzels liegt auf der Achse 12 der Wälztrommel 13. An der Spindel 17 des Schwenkteiles 15 ist ein weiteres Werkzeug 41 mit einer Werkzeugachse 42 befestigt, welches ebenfalls kegelschraubenförmig und mit abrasiven Zahnflanken 43 ausgebildet und so ausgelegt und in Fig.5 angeordnet ist, dass es mit dem geschliffenen Ritzel 2 zusammen ebenfalls vorzugsweise ein schwiefwinkliges Hypoidgetriebe bildet. Die Radachse 4 des Werkstückes 2 steht bei diesem Beispiel senkrecht zur Achse 12 bzw. zu der Radachse 3 des gedachten, zugeordneten Tellerrades 1, das als Erzeugungsgegenrad, dargestellt durch den Teilkegel 27 und den Teilkreis 22, auf der Achse 12 der Wälztrommel 13 angeordnet ist.

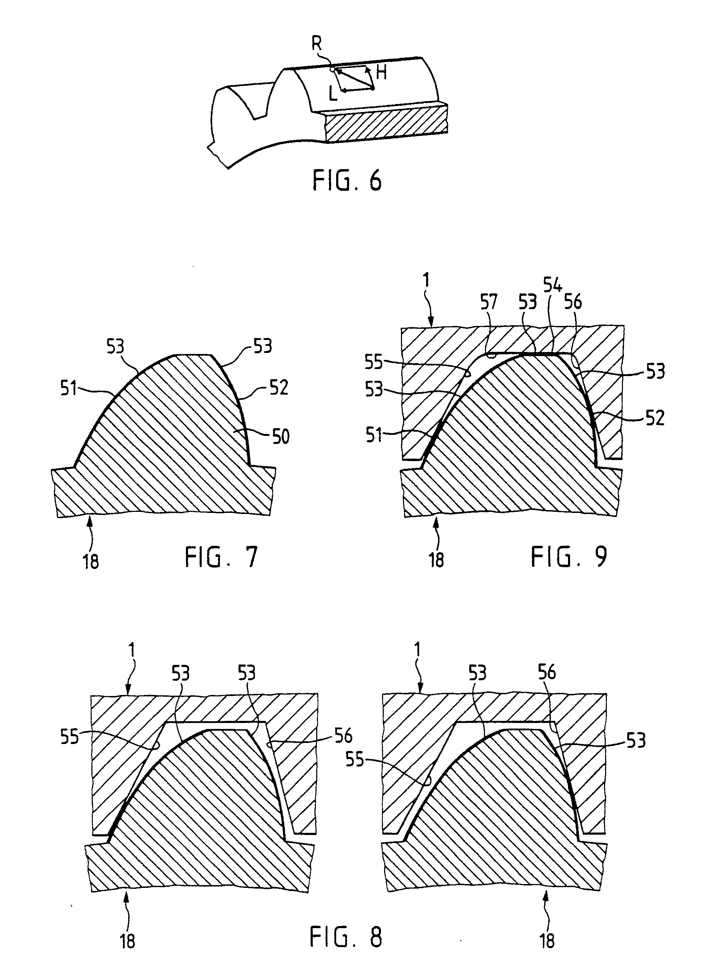

In Fig.6 ist an einem Verzahnungsausschnitt eines Werkstückes ein Zahngleit- bzw. ein Schleifrichtungsdiagramm eingezeichnet. Durch die Achsversetzung der Werkzeugachse zur Werkstückachse ergibt sich beim Kämmen zusätzlich zum Zahnhöhengleiten H ein Zahnlängsgleiten L auf den Zahnflanken. Durch das Diagramm ist jeweils die Grösse und Richtung einer Resultierenden R bestimmbar, wobei diese Werte sich über Zahnbreite und Zahnhöhe hin verändern.

Ein geschnittener Werkzeugzahn 50, gemäss Fig.7, entspricht demjenigen von Schnitt 40 in Fig.4, d.h. er ist dem Werkzeug 18 zuzuordnen. Beide Zahnflanken 51 und 52 weisen eine Oberfläche aus abrasivem Material 53 auf, beispielsweise eine 0,1mm dicke Beschichtung aus Diamantenpulver oder aus Borazon, das sich vorzüglich als beschichtetes Schleifmittel eignet. Wahlweise können auch die Zahnkopf- und Zahnfussflächen beschichtet sein. ·

In Fig.8 und 9 sind Ausschnitte aus den Verzahnungen von Werkstück 1 und Werkzeug 18 dargestellt. Gemäss Fig.8 werden beispielsweise alle hohlen Zahnflanken 55 in einem ersten und alle erhabenen Zahnflanken 56 der Verzahnung des Werkstückes 1 in einem zweiten Arbeitsgang geschliffen, beispielsweise indem die Zahndicke des Werkzeuges 18 kleiner ausgelegt wird als diejenige des Werkstückes 1. An den nicht bearbeiteten Zahnflanken ist dann jeweils ein Luftspalt vorhanden. Vorzugsweise werden aber gemäss Fig.9 sowohl die hohlen wie auch die erhabenen Zahnflanken 55 und 56 durch die mit abrasivem Material 53 beschichteten Zahnflanken 51 und 52 des Werkzeuges 18 kontinuierlich in einem Arbeitsgang geschliffen. Weiter können zusätzlich auch Zahnkopfflächen 54 an der Verzahnung mit abrasivem Material 53 versehen sein, sodass insbesondere die Fussausrundungen ebenfalls mitgeschliffen werden.

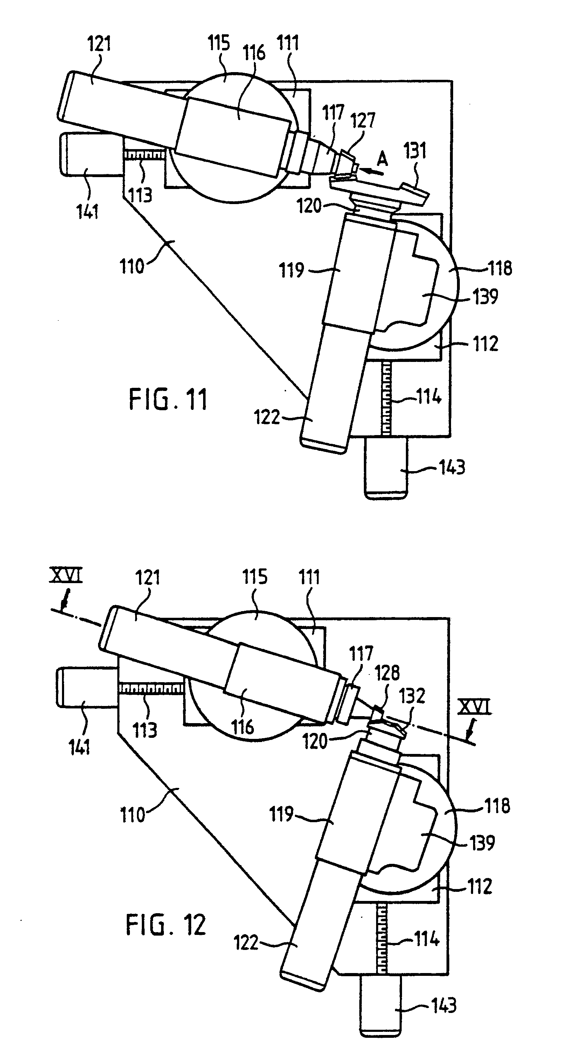

In Fig.10 ist eine resultierende Geschwindigkeit $V_R$, bei unserer Anwendung die Schleifgeschwindigkeit, anhand der bekannten Planradgeometrie und den folgenden Werten graphisch bestimmt: Berechnungspunkt 60, Werkzeugachse 61, mittlerer Planradius 62, Werkzeug-Spiralwinkel 81, Werkstück-Spiralwinkel $\beta_2$, Werkzeug-Umfangsgeschwindigkeit $V_{U1}$, Werkstück-Umfangsgeschwindigkeit $V_{U2}$ und Normalgeschwindigkeit Vn.

Wirkungsweise des Verfahrens gemäss Fig.1-10:

Bekanntlich werden Kegelradsätze mit und ohne Achsversetzung beispielsweise nach einem der beiden Erzeugungsgrundlagen Planrad oder Erzeugungsgegenrad hergestellt. Mit der Planradgeometrie hergestellte Hypoidgetriebe werden immer fehlerhafter, je grösser die relative Achsversetzung ist. Korrekte Voraussetzungen bei Hypoidgetrieben ergeben sich jedoch wieder, wenn das eine Rad nur durch Einstechen und das andere Rad nach der Erzeugungsgegenrad-Geometrie gefertigt werden. Durch die Achsversetzung beispielsweise einer Ritzelachse zu einer Tellerradachse ergibt sich zusätzlich zu den Zahnhöhengleiten ein Zahnlängsgleiten auf den Zahnflanken gemäss Fig.6. Die Grösse und Richtung der Resultierenden R als resultierende Gleitgeschwindigkeit ist somit durch den Achsversetzungswinkel beeinflussbar. Diese relative Gleitgeschwindigkeit R wird nun erfindungsgemäss als Schleifgeschwindigkeit $V_R$ bei der Schleifbearbeitung genutzt. Anhand des nachfolgenden Rechnungsbeispieles in Verbindung mit Fig.10 wird eine erforderliche

Tellerraddrehzahl $n_2$ bei einer gegebenen Schleifgeschwindigkeit $V_R$ ermittelt. Es sind gegeben:

Schleifgeschwindigkeit $\quad V_R = 15 m/s$

Mittlerer Tellerraddurchmesser $\quad d_2 = 150 mm$

Spiralwinkel Tellerrad $\quad \beta_2 = 25°$

Spiralwinkel Werkzeug $\quad \beta_1 = 60°$

Nach den folgenden bekannten Formeln wird dann die Tellerraddrehzahl $n_2$ bestimmt und rechnerisch ermittelt:

$$V_{U2} = \frac{d_2 \cdot \pi \cdot n_2}{60 \cdot 1000}$$

$$V_n = V_{U2} \cdot \cos\beta_2$$

$$V_R = V_n (tg\beta_1 - tg\beta_2)$$

$$V_R = \frac{d_2 \cdot \pi \cdot n_2 \cdot \cos\beta_2 (tg\beta_1 - tg\beta_2)}{60 \cdot 1000}$$

$$n_2 = \frac{V_R \cdot 60 \cdot 1000}{d_2 \cdot \pi \cdot \cos\beta_2 (tg\beta_1 - tg\beta_2)}$$

$$n_2 = \frac{15 \cdot 19098,593}{150 \cdot 0,9063 \cdot (1,7321 - 0,4663)} = \underline{1665 \; U/min}$$

Dies bedeutet, dass pro Sekunde jeder Zahn ca. 28mal geschliffen wird. Setzt man je einen Abtrag von 0,001mm ein, so ergibt sich ein Flankenabschliff von 0,028mm pro Sekunde bei allen Zähnen. Bei einer Schleifzugabe von ca. 0,2mm kann also ein Tellerrad gemäss dem Beispiel nach dem Härten in weniger als einer Minute geschliffen werden. Damit sind die Voraussetzungen für ein wirtschaftliches Schleifen gegeben.

Zum Schleifen des Tellerrades 1 gemäss Fig.2 ist es also notwendig, ein Gegenrad als Schleifwerkzeug so auszulegen, dass beide zusammen ein Hypoidgetriebe bilden. Tellerrad 1 und Werkzeug 18 kämmen im Verhältnis ihrer Zähnezahlen miteinander. Die erforderliche Drehzahl des Tellerrades 1 wird entsprechend dem obigen Beispiel bestimmt. Werkstück 1 und Werkzeug 18 werden beispielsweise von zwei Antriebsmotoren, welche über eine elektrische Welle miteinander verbunden sind, zwangsläufig angetrieben, d.h. die Spindeln 11 und 17 drehen mit vorgegebenen Drehzahlen synchron miteinander. Die erfindungsgemässe Vorrichtung wird später anhand der Figuren 11 - 19 ausführlich beschrieben. Zum Schleifen der Verzahnung des Werkstückes 1 erfolgt die Zustellung des Werkzeuges 18 in Richtung der Achse 12 des Wälzstockes 14, also rechtwinklig zum Berechnungspunkt 23. Vorzugsweise werden dabei beide Zahnflanken der Zähne im gleichen Arbeitsgang und kontinuierlich, weil Werkstück und Werkzeug 18 miteinander kämmen, geschliffen. Da in diesem Fall keine Wälzbewegung ausgeführt wird, kann das Schleifverfahren auch auf einer Maschine ohne Wälzeinrichtung durchgeführt werden. Wie aus Fig.4 hervorgeht, entstehen dabei am Werkstück 1 Zahnlängsflanken ohne Balligkeit in bezug zu den entsprechenden Zahnflanken des Werkzeuges. Die normalerweise erwünschte Balligkeit zwischen Ritzel 2 und Tellerrad 1 ist also bei der Herstellung der Werkzeuge 18 und 41 entsprechend vorzusehen. Weiter kann vorgesehen sein, dass die Vorverzahnungen derart ausgelegt sind, dass nicht die ganze Zahnflankenfläche, sondern nur ein vergrösserter Tragbildbereich geschliffen wird. Wie aus Fig.9 hervorgeht, entspricht der Zahnquerschnitt des Werkzeuges 18 nicht der Zahnlückenform des Werkstückes 1, weil zwischen Werkstück 1 und Werkzeug 18 nicht nur Längsbewegungen, sondern durch das Kämmen auch Höhenbewegungen entsprechend der Fig.6 ausgeführt werden.

Die Drehrichtung wird wahlweise festgelegt, vorzugsweise jedoch in der in Fig.4 eingetragenen Richtung, damit das Werkzeug 18 das Werkstück 1 von innen nach aussen durchdringt. Mit diesem kontinuierlichen Schleifverfahren werden nun nicht nur die Härteverzüge, sondern auch die Plan- und Rundlauffehler eliminiert. Insbesondere können nun auch Teilungsabweichungen eliminiert werden, indem jeder Zahn des Werkzeuges jede Zahnlücke des Werkstückes egalisierend durchläuft.

Das Schleifen mit integrierter Abwälzbewegung ist in Fig.5 dargestellt. Dabei wird ähnlich vorgegangen wie beim Schleifen von Tellerrädern gemäss Fig.2, wobei nun eine Abwälzbewegung, als zusätzliche oder alleinige Zustellbewegung, in bekannter Art um die Wälzachse 12 erfolgt. Durch eine entsprechende Ausbildung des Zahnprofiles am Werkzeug wird jedoch eine Abwälzzustellbewegung beim Schleifen gewälzter Kegelräder vermeidbar.

Vorzugsweise ist ein Werkzeug zur Ausführung des Schleifverfahrens zusätzlich zu seiner Hypoidgeometrie derart auszulegen, dass jeweils eine Eingriffsfläche eines Zahnes des Werkzeuges beim Schleifen das Negativ einer Zahnlücke des fertig geschliffenen Werkstückes im geschliffenen Bereich bildet. Nicht notwendig, jedoch mit Vorteil weist das Werkzeug eine schiefwinklige Achsversetzung zum Werkstück auf und unterscheidet sich im Normalfall gegenüber der Achsanordnung des zu bearbeitenden Kegelradgetriebes. Weiter weist es mindestens an seinen einen, hohlen oder erhabenen, Zahnflanken eine Schleifmittelschicht auf, welche beliebig erneuerbar ist. Vorzugsweise sind aber alle Zahnflanken beschichtet und das Werkzeug weist eine grössere Zahnlänge als das Werkstück auf.

Ein Werkzeug wird beispielsweise wie folgt hergestellt:

- Ein Meisterrad eines Kegelrad- oder Hypoidgetriebes wird an seinen Zahnflanken mit Schleifmittel beschichtet,
- nach einem erfindungsgemässen Verfahren wird ein vorverzahntes Werkzeug als Werkstück vom beschichteten Meisterrad als Werkzeug geschliffen und
- anschliessend wird nun das als "Meisternegativrad" vorverzahnte und geschliffene Werkzeug seinerseits mit Schleifmittel beschichtet.

Vorzugsweise ist das Meisterrad in seinen Zahnlückenfussbereichen zusätzlich mit abrasivem Material beschichtet, damit die Zahnkopfflächen des Werkzeuges zum Schleifen der Zahnfussausrundungen ausgebildet sind, siehe beispielsweise in Fig.9 das Tellerrad 1 mit einem Zahnlückenfussbereich 57 und das Werkzeug 18 mit der Zahnkopffläche 54.

Anderseits können zum Beispiel von einem gespeicherten Meisterradsatz-Datenprogramm entsprechende Datenprogramme und dazugehörige Maschineneinstelldaten für die Werkzeuge erstellt und wenn nötig solange korrigiert werden, bis die erzeugten Kegelräder exakte Nachbildungen der Meisterräder ergeben.

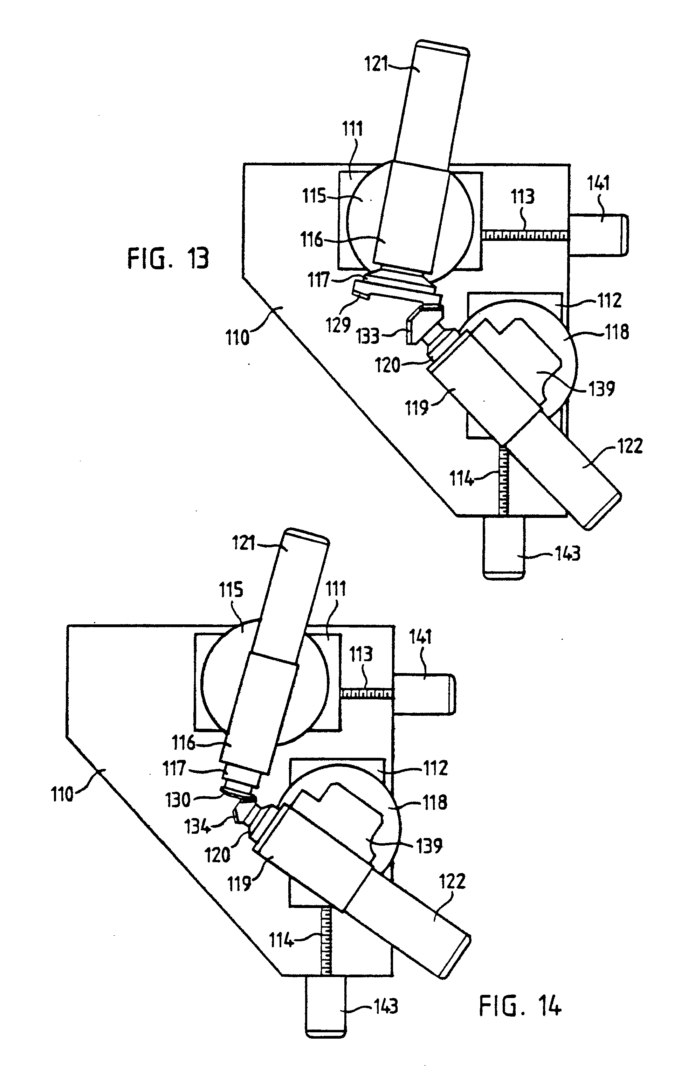

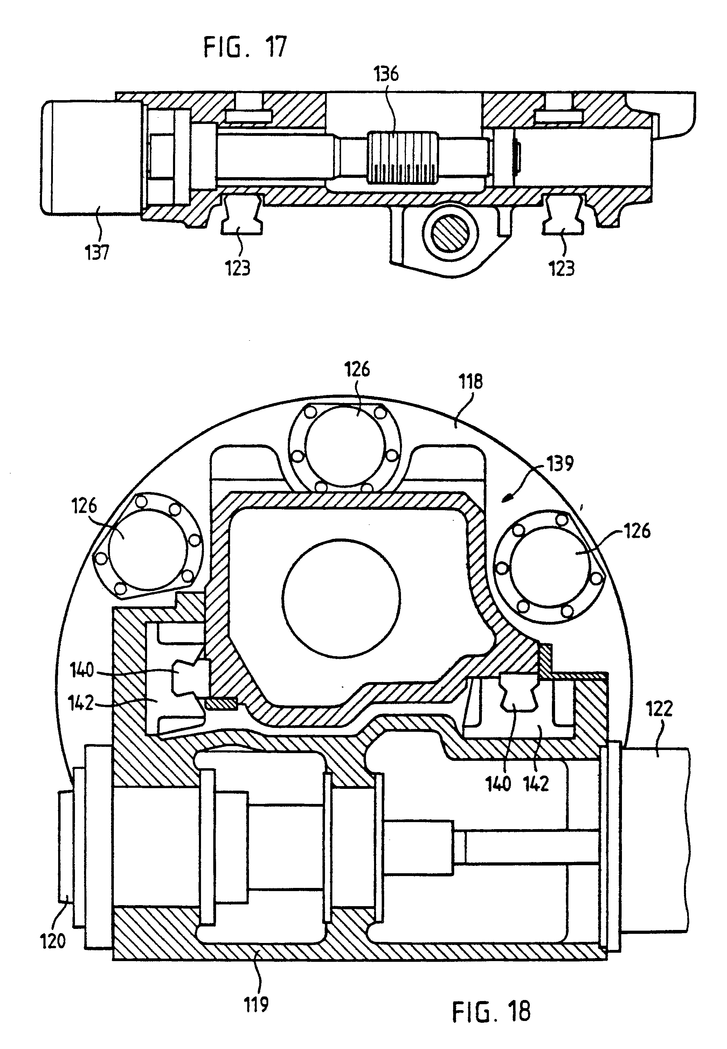

Gemäss Fig.11 - 14 weist die erfindungsgemässe Schleifvorrichtung ein Maschinenbett 110 auf. Auf diesem Maschinenbett 110 befindet sich ein erster in der Zeichnung horizontal verschiebbarer Schlitten 111 und ein zweiter in der Zeichnung vertikal verschiebbarer Schlitten 112. Zum Verschieben des ersten Schlittens 111 dient eine erste durch einen Elektromotor 141 angetriebene Spindel 113 und zum Verschieben des zweiten Schlittens 112 dient eine zweite, ebenfalls durch einen Elektromotor 143 angetriebene Spindel 114. Auf dem ersten Schlitten 111 ist ein Drehtisch 115 mit einem Gehäuse 116 für die Lagerung einer ersten Spindel 117 befestigt und auf dem zweiten Schlitten ist ein Drehtisch 118 mit einem Turm 139 (siehe Fig.14 und 18) befestigt. An diesem Turm 139 ist ein Gehäuse 119 für die Lagerung einer Spindel 120 verschiebbar geführt. Die Spindel 117 wird von einem ersten Elektromotor 121 und die Spindel 120 wird von einem zweiten Elektromotor 122 angetrieben. Auf der Spindel 117 ist das zu schleifende Werkstück 127 - 130 befestigt und auf der Spindel 120 ist ein Werkzeug 131 - 134, analog den vorgängig beschriebenen Werkzeugen 18 und 41, befestigt.

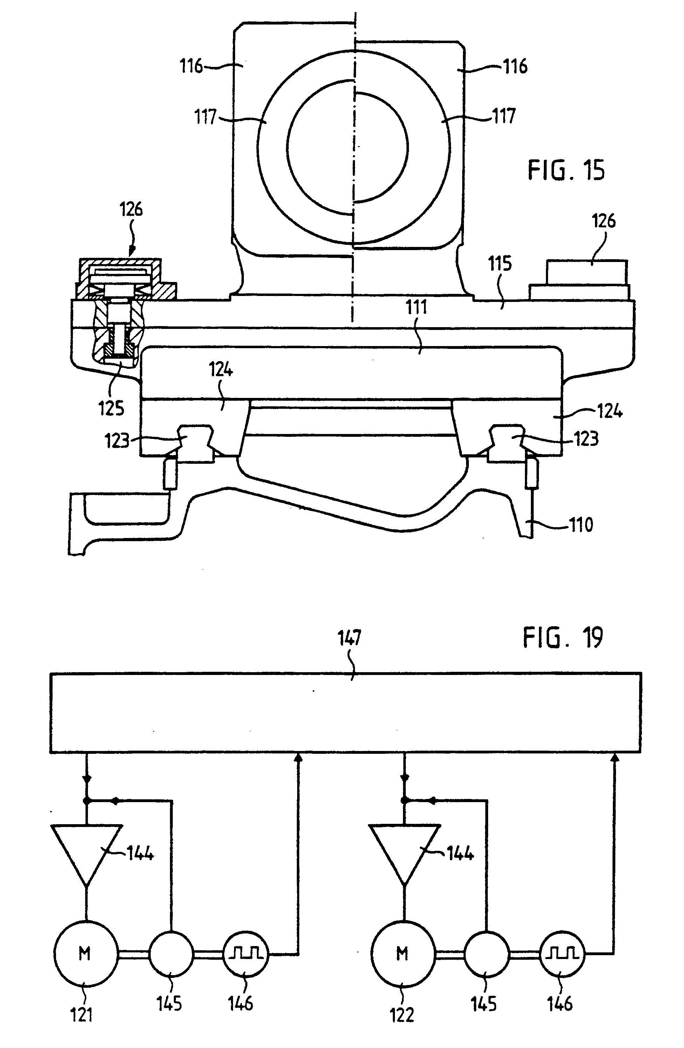

Gemäss Fig. 15 sind am Maschinenbett 110 zwei Schienen 123 befestigt, auf denen der Schlitten 111 mittels der Führungsorgane 124 verschiebbar gelagert ist. Auf diesem Schlitten 111 ist der Drehtisch 115 drehbar gelagert. Von dieser Lagerung ist in Fig.15 nur eine Ringnut 125 sichtbar, sowie zwei von sechs Klemmtöpfen 126, mit denen der Drehtisch 115 in jeder beliebigen Stellung an der Ringnut 125 des Schlittens 111 festgeklemmt werden kann. Auf diesem Drehtisch 115 ist das Spindelgehäuse 116 befestigt, in welchem die Spindel 117 gelagert ist. Die linke Hälfte der Zeichnung zeigt eine Spindel 117 von grösserem Durchmesser für grosse Werkstücke 127 und 129 (Fig.11 und 13) und die rechte Hälfte der Zeichnung zeigt eine Spindel 117 von kleinerem Durchmesser für kleine Werkstücke 128 und 130 (Fig.12 und 14).

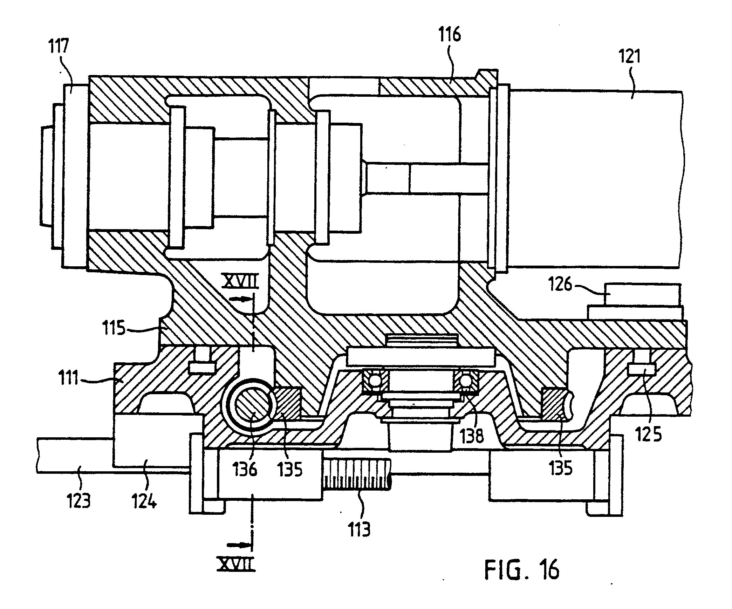

Gemäss Fig.16 ist der Schlitten 111 auf Schienen 123 des nicht dargestellten Maschinenbettes 110 mittels der Führungsorgane 124 und mit Hilfe der Spindel 113 verschiebbar geführt. Auf dem Schlitten 111 ist der Drehtisch 115 drehbar gelagert. An der Unterseite des Drehtisches 115 ist ein Schneckenrad 135 befestigt, das mit einer Schnecke 136 in Eingriff steht. Um den Drehtisch 115 auf dem Schlitten 111 zu drehen, wird das Schneckenrad 135 über die Schnecke 136 von einem Elektromotor 137 (Fig.17) angetrieben. Damit sich der Drehtisch 115 auf dem Schlitten 111 leicht drehen lässt, ist in der Mitte des Drehtisches 115 ein Kugellager 138 vorgesehen. Zum Festklemmen des Drehtisches 115 in der gewünschten Stellung auf dem Schlitten 111 befindet sich im Schlitten 111 die Ringnut 125 und am Drehtisch 115 sind eine Anzahl, z.B. sechs, Klemmtöpfe 126 angeordnet, mit deren Hilfe der Drehtisch 115 an der Ringnut 125 des Schlittens 111 festgeklemmt werden kann. Im Spindelgehäuse 116 ist die Spindel 117 in üblicher Weise gelagert.

Gemäss Fig.18 ist am Drehtisch 118 ein Turm 139 befestigt. Dieser Turm 139 besitzt zwei vertikale Schienen 140, auf denen das Gehäuse 119 mit Hilfe von Führungsorganen 142 verschiebbar gelagert ist. Im Gehäuse 119 ist in üblicher Weise die Spindel 120 drehbar gelagert. Somit ist das Gehäuse 119 der Spindel 120 auf dem Drehtisch 118 an einem Turm 139 vertikal verschiebbar gelagert, im Gegensatz zum Gehäuse 116 der Spindel 117, welches starr am Drehtisch 115 befestigt ist.

Gemäss Fig.19 werden die beiden Elektromotoren 121 und 122 durch eine an sich bekannte "elektrische Welle", auch elektronisches Getriebe genannt, miteinander verbunden. Diese "elektrische Welle" ist notwendig, denn es ist nicht möglich, Werkzeug und Werkstück über ein mechanisches Getriebe miteinander zu verbinden, da die zum Schleifen des Werkstückes erforderliche Drehzahl viel zu hoch ist und sich nicht über ein Zahnradgetriebe oder dergleichen vom Werkzeug auf das Werkstück übertragen lässt. Bei hohen Drehzahlen wäre die Abnützung eines solchen mechanischen Getriebes viel zu gross.

Diese "elektrische Welle" weist gemäss Fig. 19 für jeden Elektromotor 121 und 122 je einen Drehzahlregler 144, einen Tachogenerator 145 und einen Impulsgeber 146 auf. Durch eine elektronische Steuerung 147 werden die beiden Motoren 121 und 122 mit den gewünschten Drehzahlen zueinander synchron angetrieben. Da Werkzeug und Werkstück als Zahnräder ausgebildet sind, müssen die Drehzahlen der beiden Motoren proportional zu den Zähnezahlen dieser Zahnräder sein. Die elektronische Steuerung ist in bekannter Weise aufgebaut, enthält eine Bedienungstafel mit Bildschirm und Funktionstasten, ein NC-System, ein elektronisches Getriebe, eine Baugruppe mit den Ein- und Ausgängen zur Schleifmaschine etc.

Von den beiden Motoren 121 und 122 ist der eine Motor als Leitmotor und der andere Motor ist als Folgemotor ausgebildet.

Der Leitmotor sollte sich schneller drehen als der Folgemotor, da die "elektrische Welle" präziser arbeitet, wenn sich der Leitmotor schneller dreht als der Folgemotor. Der Leitmotor sollte aber vorzugsweise das Werkzeug und nicht das Werkstück antreiben. Falls das Tellerrad geschliffen werden soll, lassen sich beide Forderungen erfüllen, da sich dann das Ritzel als Werkzeug schneller dreht. Falls jedoch das Ritzel geschliffen werden soll, dann kann nur eine der beiden Forderungen erfüllt werden. Vorzugsweise wird man dann das sich schneller drehende Werkstück, nämlich das Ritzel, durch den Leitmotor antreiben.

Vorzugsweise ist daher die Schleifmaschine gemäss Fig. 13 und 14 aufgebaut, wobei der Elektromotor 122 auf dem Turm 139 als Leitmotor 122 und der Elektromotor 121 als Folgemotor 121 sowie die Spindel 120 zur Aufnahme des vorwiegend schneller drehenden Ritzels, Werkzeug oder Werkstück, bestimmt ist.

Die "elektrische Welle" kann analog oder digital gesteuert werden. Vorzugsweise wird für diese Schleifmaschine eine digitale Steuerung verwendet. Bei digitaler Steuerung erzeugt der Leitmotor bei seiner Drehung Impulse, die zur Steuerung des Folgemotors verwendet werden. Bei jedem Impuls, den der Impulsgeber des Leitmotors 122 abgibt, dreht er sich selber um einen Winkel $\alpha_1$ und bewirkt, dass sich der Folgemotor 121 um einen Winkel $\alpha_2$ dreht. Es gilt:

$$\frac{\alpha_1}{\alpha_2} = \frac{z_2}{z_1} = \frac{\alpha_{ist}}{\alpha_{soll}} \, ,$$

wobei

$Z_1$ = Anzahl Zähne des vom Leitmotor 122 angetriebenen Zahnrades
$Z_2$ = Anzahl Zähne des vom Folgemotor 121 angetriebenen Zahnrades
$\alpha_{ist}$ = Istdrehwinkel des Leitmotors 122 und
$\alpha_{soll}$ = Solldrehwinkel des Folgemotors 121 sind.

Bei dieser Steuerung ist wesentlich, dass sich ein Zahn des Werkzeuges oder des Werkstückes in einer vorgegebenen Position, beispielsweise genau in der Mitte einer Zahnlücke des Gegenrades befindet. Wenn Werkzeug und Werkstück miteinander in Eingriff gebracht werden, muss daher beispielsweise ein Zahn des Werkzeuges in einer Zahnlücke des Werkstückes entsprechend positioniert, beispielsweise eingemittet werden. Für dieses Positionieren oder Einmitten gibt es verschiedene Verfahren, die sich mit oder ohne digitalgesteuerte "elektrische Welle" durchführen lassen. Vier vorzugsweise Einmitt-Verfahren sollen im folgenden ausführlich anhand der Fig.13 und 19 beschrieben werden. Vor dem eigentlichen Positionieren oder Einmitten sind Werkzeug und Werkstück soweit in Position zu bringen, dass nicht mehr Zahn auf Zahn stossen kann. Weiter wird vorausgesetzt, dass die Steuermittel für diese Verfahren vorwiegend in der Steuerung 147 integriert sind.

Gemäss einem ersten Ausführungsbeispiel wird bei stillstehenden, im Eingriff stehenden Zahnrädern eingemittet. Der Impulsgeber 146, der auch als inkrementaler Drehgeber bezeichnet wird, wird als Berührungsgeber des Leitmotors 122 verwendet. Ein solcher Impulsgeber besitzt eine hohe Auflösung von z.B. einem Impuls für 1/1000 Grad Drehung. Der Folgemotor 121 wird solange bewegt, bis sich die beiden Zahnräder berühren und dabei der Impulsgeber 146 des Leitmotors 122 einen Impuls an die Steuerung 147 abgibt. Daraufhin dreht sich der Folgemotor 121 in entgegengesetzter Richtung, bis sich die Zahnräder nochmals berühren und der Impulsgeber 146 des Leitmotors 122 wieder einen Impuls abgibt. Anschliessend wird die Drehrichtung des Folgemotors 121 nochmals umgekehrt und der Folgemotor 121 um den halben Betrag als zuvor gedreht, so dass sich ein Zahn des einen Zahnrades genau in der Mitte einer Lücke des anderen Zahnrades befindet. Falls sich beispielsweise die vorgegebene definitive Position nicht genau in der Mitte befindet, wird der Folgemotor um einen entsprechend anderen Betrag positioniert.

Gemäss einem zweiten Ausführungsbeispiel wird bei sich drehenden im Eingriff stehenden Zahnrädern eingemittet. Solange sich beide Zahnräder drehen, ohne sich zu berühren, ist der Schleppabstand zwischen Leitmotor 122 und Folgemotor 121 relativ klein. Unter Schleppabstand ist die Differenz zwischen Sollwert und Istwert der Stellung des Folgemotors 121 zu verstehen. Sobald sich aber die beiden Zahnräder berühren, verändert sich dieser Schleppabstand, denn der Folgemotor 121 liefert nur das nötige Drehmoment, damit sich das entsprechende Zahnrad drehen kann. Die Aenderung des Schleppabstandes wird in der Schaltung 147 ausgewertet zur Einmittung eines Zahnes des einen Zahnrades in eine Lücke des anderen Zahnrades analog wie beim oben beschriebenen ersten Ausführungsbeispiel.

Gemäss einem dritten Ausführungsbeispiel wird bei sich drehenden im Eingriff stehenden Zahnrädern eingemittet. Die Berührung der beiden Zahnräder wird durch ein Mikrophon erkannt. Der Aufprall einer Zahnflanke auf die benachbarte Zahnflanke erzeugt Schallwellen, die ausgewertet werden können zum Einmitten der Zahnräder in der beschriebenen Weise.

Beim vierten Ausführungsbeispiel wird das Werkstück 129 nicht gebremst. Das Werkzeug 133, das mit dem Leitmotor 122 verbunden ist, wird mit einem Zahn in eine Zahnlücke des Werkstückes 129 hineingeschoben. Sobald eine Zahnflanke des Werkzeuges 133 eine Flanke der Zahnlücke des Werkstückes 129 berührt, wird durch diese Berührung des ungebremsten Werkstückes 129 ein Drehmoment erzeugt, das durch einen Drehmomentgeber gemessen wird. Dabei wird ein Impuls erzeugt, durch den sich der Leitmotor 122 und das Werkzeug 133 zu drehen beginnen, bis die andere Zahnflanke am Werkzeug die andere Flanke der Zahnlücke am Werkstück berührt. Bei dieser Drehung erzeugt der Leitmotor 122 oder Folgemotor 121 am Impulsgeber 146 wiederum eine Anzahl Impulse, die gezählt werden. Sobald die andere Flanke des Zahnes am Werkzeug 133 die andere Flanke der Zahnlücke am Werkstück 129 berührt, wird ein entgegengesetztes Drehmoment erzeugt und der Leitmotor 122 in seiner Drehrichtung umgeschaltet und um die Hälfte der gezählten Impulse zurückgedreht. Somit befindet sich der eine Zahn des Werkzeuges genau in der Mitte der einen Zahnlücke des Werkstückes.

Das Verhalten einer "elektrischen Welle" bzw. eines elektronischen Getriebes wird hier als bekannt vorausgesetzt. Die Regelungstechnik lässt sich nahezu beliebig verfeinern, sodass die geforderte Uebereinstimmung des Drehwinkels von Werkzeugwelle und Werkstückwelle erreichbar ist, insbesondere da beim Schleifen der Kegelräder wesentlich kleinere Kraftschwankungen auftreten als beim Schneiden der Kegelräder. Da der Folgemotor - der vom Leitmotor über die elektronische Steuerung schrittweise angetrieben wird - eine verhältnismässig grosse Masse in Bewegung setzen muss, nämlich Welle und Zahnrad, sind Schwingungen dieser Masse unvermeidlich. Diese Schwingungen werden jedoch durch den Schleifvorgang weitgehend gedämpft und können sich sogar vorteilhaft auswirken.

Die bei "elektrischen Wellen" übliche Regelungstechnik lässt sich z.B. dadurch verbessern, dass zusätzlich ein adaptiver Regler verwendet wird, mit variabler Verstärkung in Funktion der Drehzahl. Ausserdem kann ein "Beobachter-Regler" verwendet werden, mit Implementierung von Regelungsalgorithmen.

Die Arbeitsweise der Schleifvorrichtung wird nun anhand der Fig.13 erläutert:

Zuerst wird auf der Spindel 117 das Werkstück 129 und auf der Spindel 120 das Werkzeug 133 aufgesetzt. Anschliessend wird in der beschriebenen Weise ein Zahn des Werkzeuges 133 in eine Zahnlücke des Werkstückes 129 positioniert oder eingemittet und Leitmotor 122 und Folgemotor 121 auf vollen Drehzahlen laufen gelassen, wobei Werkzeug 133 und Werkstück 129 relativ zueinander so angeordnet werden, dass sich deren Zähne während der Beschleunigung von Werkzeug 133 und Werkstück 129 auf ihre vollen Drehzahlen nicht berühren. Dies ist notwendig, denn bei der Beschleunigungsphase kann ein unerwünschter Schleppabstand zwischen Leitmotor und Folgemotor auftreten. Erst wenn die vollen Tourenzahlen von Leitmotor 122 und Folgemotor 121 erreicht sind, werden Werkzeug 133 und Werkstück 129 in die Schleifposition zugestellt. Nun wird bei vollen Drehzahlen das Werkstück 129 mit vorgegebener Zustellung geschliffen. Bevor die Drehzahlen der beiden Motoren 121 und 122 abgesenkt werden, werden Werkzeug 133 und Werkstück 129 vorzugsweise ausser Eingriff gebracht. Dies ist notwendig, denn auch in der Verzögerungsphase kann ein unerwünschter Schleppabstand auftreten.

**Ansprüche**

1. Verfahren zum Schleifen der Verzahnung von Kegelrädern eines Kegelradgetriebes (1,2) mit längsgekrümmten Zähnen, mit einem abrasive Oberflächen (19,43) an Zahnflanken seiner Verzahnung aufweisendes Werkzeug und einem vorverzahnten Kegelrad (1,2) als Werkstück, welche zwangsläufig miteinander kämmend angetrieben werden und wobei mit einer relativen Zustellbewegung alle hohlen oder erhabenen Zahnflanken (55,56) des Werkstückes (1,2) in einem Arbeitsgang geschliffen werden, dadurch gekennzeichnet, dass ein kegelschraubenförmiges und mit allgemeiner Hypoidanordnung (Achsversetzung und Achsversetzungswinkel frei wählbar) zum Werkstück (1,2) ausgelegtes Werkzeug (18,41), unbeachtet der Achsanordnung (3,4) des Kegelradgetriebes (1,2) verwendet wird, wobei die allgemeine Hypoidanordnung und die Drehzahlen von Werkzeug (18,41) und Werkstück (1,2) derart gewählt werden, dass eine relative Gleitgeschwindigkeit zwischen Werkzeug (18,41) und Werkstück (1,2) in den Bereich von Schleifgeschwindigkeit fällt, sowie Werkzeug (18,41) und Werkstück (1,2) synchron mittels elektronischem Getriebe angetrieben werden.

2. Verfahren nach Anspruch 1, dadurch gekennzeichnet, dass alle hohlen und erhabenen Zahnflanken (55,56) in einem kontinuierlichen Arbeitsgang gleichzeitig geschliffen werden.

3. Werkzeug zur Ausführung des Verfahrens gemäss Anspruch 1, welches kegelschraubenförmig und mit abrasiven Oberflächen an mindestens den hohlen oder erhabenen Zahnflanken (20) ausgebildet ist, dadurch gekennzeichnet, dass das Werkzeug (18,41) mit allgemeiner Hypoidanordnung (Achsversetzung und Achsversetzungswinkel frei wählbar) zu einem Werkstück, einem zu bearbeitenden Kegelrad (1,2) eines Kegelradgetriebes, unbeachtet der Achsanordnung (3,4) des Kegelradgetriebes ausgelegt ist und die allgemeine Hypoidanordnung unter zusätzlicher Berücksichtigung der Drehzahlen von Werkzeug (18,41) und Werkstück (1,2) derart ausgelegt ist, dass eine relative Gleitgeschwindigkeit zwischen Werkzeug (18,41) und Werkstück (1,2) in den Bereich von Schleifgeschwindigkeit fällt.

4. Werkzeug nach Anspruch 3, dadurch gekennzeichnet, dass alle Zahnflanken (20) der Verzahnung eine abrasive Oberfläche (19) aufweisen und als abrasive Oberfläche beschichtetes Schleifmittel vorgesehen ist.

5. Werkzeug nach Anspruch 4, dadurch gekennzeichnet, dass es eine grössere Zahnlänge als das Werkstück (1,2) aufweist.

6. Werkzeug nach Anspruch 5, dadurch gekennzeichnet, dass ein Teilkreis (25) des Werkzeuges (18) grösser gewählt ist als ein Teilkreis eines Gegenrades (2) zu einem Werkstück (1).

7. Werkzeug nach Anspruch 4 oder 5, dadurch gekennzeichnet, dass ein Achsversetzungswinkel (∅) zwischen Werkstück (1,2) mindestens 20° beträgt.

8. Werkzeug nach einem der Ansprüche 4 bis 7, dadurch gekennzeichnet, dass jeweils die Eingriffsflächen der Zahnflanken des Werkzeuges (18,41) beim Schleifen das Negativ des fertiggeschliffenen Werkstückes (1,2) im geschliffenen Bereich bilden.

9. Vorrichtung zur Durchführung des Verfahrens nach Anspruch 1, mit zwei Spindeln (11,17,117,120) zum Aufspannen von Werkzeug und Werkstück, wobei mindestens eine Spindel verschiebbar und einstellbar angeordnet ist, dadurch gekennzeichnet, dass sowohl für den Antrieb des Werkzeuges (18,41,131-134) als auch für den Antrieb des Werkstückes (1,2,127-130) je ein separater Elektromotor (121,122) koaxial zu den Spindeln (11,17,117,120) angeordnet ist, dass die beiden Elektromotoren (121,122) über eine "elektrische Welle" (144-147) synchron miteinander verbunden sind, dass zwei auf einem Maschinenbett (110) zueinander verschiebbar angeordnete Schlitten (111 und 112) je einen Drehtisch (115 und 118) mit einem Gehäuse (116 und 119) zur Lagerung je einer der zwei Spindeln (117,120) und des zugeordneten Elektromotors (121 und 122) aufweisen und dass auf einem der Drehtische (118) das Gehäuse (119) in Richtung deren Drehachse verschiebbar gelagert ist.

10. Vorrichtung nach Anspruch 9, dadurch gekennzeichnet, dass der beim verschiebbaren Gehäuse (119) angeordnete Elektromotor (122) als Leitmotor (122) und der beim anderen Gehäuse (116) angeordnete Elektromotor (121) als Folgemotor (121 ausgebildet ist, wobei auf der vom Leitmotor (122) angetriebenen Spindel (120) vorwiegend das Ritzel (127,128,133,134) aufgespannt wird.

11. Vorrichtung nach Anspruch 9, dadurch gekennzeichnet, dass Mittel (146,147) vorhanden sind zum Positionieren eines Zahnes des Werkzeuges oder Werkstückes in einer Zahnlücke des Werkstückes oder Werkzeuges in eine vorgegebene Position.

## Claims

1. Method for grinding the toothing of bevel gears of a bevel gearing (1, 2) with longitudinally curved teeth, comprising a tool with abrasive surfaces (19, 43) on the tooth flanks of its toothing, and a workpiece in the form of a pretoothed bevel gear (1, 2), which are driven whilst forcibly meshing, and whereby, by way of a relative delivery movement, all hollow or proud tooth flanks (55, 56) of the workpiece (1, 2) are ground in one work process, **characterised in that** a cone-screw shaped tool (18, 41), which is laid out in a general hypoid arrangement (axis transposition and axis-transposition angle freely selectable) relative to the workpiece (1, 2), is used regardless of the axis arrangement (3, 4) of the bevel gearing (1, 2), in which respect the general hypoid arrangement and the revolutions of tool (18, 41) and workpiece (1, 2) are chosen so that a relative slide speed between tool (18, 41) and workpiece (1, 2) falls within the range of the grinding speed, and in that tool (18, 41) and workpiece (1, 2) are synchronously driven by means of an electronic gear.

2. Method according to claim 1, **characterised in that** all hollow and proud tooth flanks (55, 56) are simultaneously ground in one continuous process.

3. Tool for carrying out the method according to claim 1, which is arranged to be cone-screw shaped and with abrasive surfaces on at least the hollow or the proud tooth flanks (20), **characterised in that** the tool (18, 41) is laid out in a general hypoid arrangement (axis transposition and axis-transposition angle freely selectable) relative to a workpiece, a bevel wheel (1, 2) of a bevel gearing to be processed, regardless of the axis arrangement (3, 4) of the bevel gearing, and in that the general hypoid arrangement is laid out whilst additionally taking into account the revolutions of the tool (18, 41) and the workpiece (1, 2) in such a manner that a relative slide speed between tool (18, 41) and workpiece (1, 2) falls within the range of the grinding speed.

4. Tool according to claim 3, **characterised in that** all tooth flanks (20) of the toothing have an abrasive surface (19) and in that the abrasive surface is a coating of a grinding means.

5. Tool according to claim 4, **characterised in that** the length of its teeth is greater than that of the workpiece (1, 2).

6. Tool according to claim 5, **characterised in that** a component circle (25) of the tool (18) is chosen to be larger than a component circle of the mating wheel (2) relative to a workpiece (1).

7. Tool according to claim 4 or 5, **characterised in that** an axis-transposition angle (0) between workpiece (1, 2) is at least $20°$.

8. Tool according to one of claims 4 to 7, **characterised in that**, during grinding, the respective engaging surfaces of the tooth flanks of the tool (18, 41) form the negative of the finished workpiece (1, 2) in the ground area.

9. Device for carrying out the method according to claim 1, comprising two spindles (11, 17, 117, 120) for clamping tool and workpiece, in which respect at least one spindle is arranged to be slidable and adjustable, **characterised in that** a separate electric motor (121, 122) for both the drive of the tool (18, 41, 131-134) and the drive of the workpiece (1, 2, 127-130) is arranged coaxially relative to the spindles (11, 17, 117, 120), in that the two electric motors (121, 122) are synchronously interconnected via an "electrical wave" (144-147), in that two slides (111 and 112), which are arranged to be displaceable relative to one another on a machine foundation (110), comprise each a turntable (115 and 118) with a housing (116 and 119) for accommodating each one of the two spindles (117, 120) and the associated electric motor (121 and 122), and in that the housing (119) is mounted onto one of the turntables (118) to be displaceable in the direction of their axis of rotation.

10. Device according to claim 9, **characterised in that** electric motor (122), which is arranged at the displaceable housing (119), is arranged to be the control motor (122), and the electric motor (121) is arranged to be a follower motor (121), in which respect the geared wheel (127, 128, 133, 134) is mainly clamped onto the spindle (120) which is driven by the control motor (122).

11. Device according to claim 9, **characterised in that** means are provided for positioning a tooth of the tool or workpiece in a tooth space of the workpiece or tool in a pre-determined position.

**Revendications**

1. Procédé de rectification de la denture de roues coniques d'une paire de roues coniques (1, 2) à dents incurvées longitudinalement, avec un outil dont les flancs de la denture présentent une surface abrasive (19, 43) et une roue conique (1, 2) à denture préfabriquée, constituant la pièce, ces roues étant entraînées en prise forcée et par un mouvement d'avance relative, on rectifie au cours d'une passe tous les flancs de dent (55, 56) concaves ou convexes de la pièce (1, 2), procédé caractérisé en ce qu'on utilise un outil (18, 41) en forme de vis conique avec une disposition générale d'hypoïde (décalage d'axe et angle de décalage d'axe, librement choisis) par rapport à la pièce (1, 2) indépendamment de la disposition des axes (3, 4) de la paire de roues coniques (1, 2) et la disposition générale en hypoïde ainsi que les vitesses de rotation de l'outil (18, 41) et la pièce (1, 2) sont choisies pour avoir une vitesse de glissement relative entre l'outil (18, 41) et la pièce (1, 2) dans la zone de la vitesse de rectification et on entraîne en synchronisme par une transmission électronique l'outil (18, 41) et la pièce (1, 2).

2. Procédé selon la revendication 1, caractérisé en ce que tous les flancs de dent (55, 56) convexes et concaves sont rectifiés simultanément au cours d'une phase de travail continue.

3. Outil pour la mise en oeuvre du procédé selon la revendication 1, de forme hélicoïdale conique, avec au moins des surfaces abrasives sur les flancs de dent (20) convexes ou concaves, outil caractérisé en ce qu'il (18, 41) est conçu avec une disposition générale d'hypoïde (décalage d'axe et angle de décalage d'axe librement choisis) par rapport à une pièce, une roue conique (1, 2) à usiner appartenant à une paire de roues coniques, indépendamment de la disposition d'axes (3, 4) de la paire de roues coniques et la disposition générale en hypoïde est en outre conçue en tenant compte de la vitesse de rotation de l'outil (18, 41) et de la pièce (1, 2) et en ce qu'une vitesse de glissement relative entre l'outil (18, 41) et la pièce (1, 2) tombe dans la plage de la vitesse de rectification.

4. Outil selon la revendication 3, caractérisé en ce que tous les flancs de dent (20) de la denture ont une surface (19) abrasive et comportent un revêtement de surface par un agent de rectification abrasif.

5. Outil selon la revendication 4, caractérisé en ce qu'il possède des dents de plus grande longueur que celles de la pièce (1, 2).

6. Outil selon la revendication 5, caractérisé en ce qu'un cercle primitif (25) de l'outil (18) est choisi supérieur à un cercle primitif d'une contre-roue (2) pour une pièce (1).

7. Outil selon la revendication 4 ou 5, caractérisé en ce que l'angle de décalage (∅) d'axe par rapport à la pièce (1, 2) est d'au moins 20°.

8. Outil selon l'une des revendications 4 à 7, caractérisé en ce que chaque fois les surfaces de prise des flancs de dent de l'outil (18, 41) lors de la rectification forment le négatif de la pièce (1, 2) dont la rectification est terminée, dans la zone à rectifier.

9. Dispositif pour la mise en oeuvre du procédé selon la revendication 1 comportant deux broches (11, 17, 117, 120) pour recevoir l'outil et la pièce, au moins une broche étant coulissante et réglable, dispositif caractérisé en ce qu'à la fois l'entraînement de l'outil (18, 41, 131-134) et celui de la pièce (1, 2, 127-130) sont constitués par un moteur électrique distinct (121, 122) coaxiaux aux broches (11, 17, 117, 120) et les deux moteurs électriques (121, 122) sont reliés de manière synchrone par un "axe électrique" (144, 147) et en ce que deux chariots (111, 112) coulissant sur le bâti (110) de la machine comportent chacun une table tournante (115, 118) avec un boîtier (116 et 119) pour recevoir chacun l'une des deux broches (117, 120) et le moteur électrique (120, 121) correspondant et en ce que l'une des tables tournantes (118) porte le boîtier (119) coulissant en direction de son axe de rotation.

10. Dispositif selon la revendication 9, caractérisé en ce que le moteur électrique (122) du boîtier coulissant (119) est le moteur-maître (122) et le moteur électrique (121) de l'autre boîtier (116) est le moteur-esclave (121), la broche (120) entraînée par le moteur-maître (122) recevant de préférence le pignon (127, 128, 133, 134).

11. Dispositif selon la revendication 9, caractérisé par des moyens (146, 147) pour positionner une dent de l'outil ou de la pièce dans un intervalle de dents de la pièce ou de l'outil, selon une position prédéterminée.

FIG. 1

2

6

4

3

7

$\beta_1$

$\varphi$

$\beta_2$

1

5

$V_n$

$V_{U2}$

$V_R$

60

$V_{U1}$

61

62

FIG. 10

14

FIG. 2

FIG. 3

FIG. 4

FIG. 5

FIG. 6

FIG. 7

FIG. 9

FIG. 8

FIG. 11

FIG. 12

FIG. 13

FIG. 14

FIG. 15

116 — 116
117 — 117

126

115

126

111

124

125

124

123 — 123

110

FIG. 19

147

144

144

M
121

145

146

M
122

145

146

FIG. 16

FIG. 17

FIG. 18